(19) **Europäisches Patentamt / European Patent Office / Office européen des brevets**

(11) **EP 3 582 030 A1**

(12) **EUROPEAN PATENT APPLICATION**

(43) Date of publication:
18.12.2019 Bulletin 2019/51

(51) Int Cl.:
**G05B 13/02** (2006.01) **G05B 15/02** (2006.01)
**B60H 1/00** (2006.01)

(21) Application number: 18176973.8

(22) Date of filing: 11.06.2018

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Bayerische Motoren Werke Aktiengesellschaft**
**80809 München (DE)**

(72) Inventors:
• **Li, Qing**
**Chicago, IL Illinois 60610 (US)**
• **Dr.Tian, Jilei**
**Chicago, IL Illinois 60605 (US)**

(54) **METHOD AND SYSTEM FOR SMART INTERIOR OF A VEHICLE**

(57) A method and system for Method (300) for determining control data (266) for controlling a component (130) of a vehicle (100) based on a component control model (240) is disclosed. The method comprises receiving history data (280) indicative of a usage history; receiving context data (220) indicative of a usage context; training (306) the component control model (240) based on the history data (280); inferring (308), based on the context data (220) and on the component control model (240), a predicted action; and determining (310) the control data (266) based on the predicted action. A system (200) for determining control data (266) for controlling a component (130) of a vehicle (100) is also disclosed. The system comprises a control unit (120) configured for performing the disclosed method. A vehicle (100) comprising the system (200) is also disclosed.

Fig. 2

**Description**

**Technical Field**

The present disclosure relates to a method and system for smart interior, in particular smart preconditioning, of a vehicle. In a preferred embodiment, there is provided a method and system for context-aware and personalized smart preconditioning of a vehicle. The method and system include machine-learning algorithms in order to learn users' behavior, and real time context processing in order to recognize the respective context.

**Background Art**

In the automotive industry smart interior pertains to smart application of vehicle interior features, including but not limited to entertainment functions, communication functions, climate functions (e.g. A/C, ventilation), and other. In this respect, in particular, smart preconditioning represents a key focus. Smart preconditioning enables learning users' behavior in order to predict users' preferences with respect to interior conditions in a vehicle depending on a given situation. A central aim for methods and systems for smart preconditioning is to automatically provide the interior of a vehicle with desired conditions (e.g. regarding temperature, heating, cooling, and ventilation) without the need for a user to expressly and/or manually activate specific functions setting such conditions.

With the rapid growth of digital services in the automotive industry, providing extensive data on user behavior, machine learning on user behavior from the data makes contextual and personalized interior control possible. Thus methods and systems are enabled to automatically control an interior of a vehicle depending on users' behavior and a respective situation. Such methods and systems relieve the users from expressly and/or manually regulate the conditions in the vehicle and, thus, minimize the cognitive load required for generally operating the vehicle.

Smart preconditioning constitutes a key feature in smart interior applications. Users expect a control unit of the vehicle to be able to predict when the user might drive to a next destination, and to set the interior conditions, for example seat heating, driving wheel heating, ventilation, climate control, A/C, windows, and more, depending on a learnt behavior associated with the user for a given situation. As a result, the user should not feel too cold, or too hot, but instead find the vehicle being (pre-) conditioned in line with the users preferences. Further, smart preconditioning should prevent secondary issues from occurring, which are not directly tied to a user's preferences, but may be important for other reasons (e.g. preventing windows from fogging or freezing up, thereby improving driving safety).

Providing smart interior functions to a vehicle, in particular smart preconditioning, entails several challenges. Whether a preconditioning event should be activated can be determined by multiple factors: parking location and environment (indoor, outdoor), parking duration, weather information, and a user's personal preference.

Current preconditioning systems typically require users to schedule specific preconditioning events, which is often cumbersome for the users and/or difficult to predict. In many cases, a user may either forget to set preconditioning of the vehicle or fail to set preconditioning for the correct time. Thus, very often users only realize that preconditioning was needed when they get into the vehicle.

US 2011/0153140 A1 describes a method for conditioning one or more aspects of a vehicle, where a user may customize their vehicle by providing desired departure times and conditioning preferences so that the vehicle automatically wakes up, performs the requested conditioning, and is ready for operation by the requested departure time. Some examples of potential conditioning events include activating: a heated or cooled seat, a heated steering wheel, a heated engine block, a heated mirror, a cabin heating ventilation and air conditioning (HVAC) system, a heating or cooling element for a battery pack, a heating or cooling element for a battery charger, and a heating or cooling element for a fuel cell, to name a few. According to the described method, however, the departure time needs to be predetermined by the user and the current vehicle condition has to be detected.

US 2010/0235046 A1 describes a method for preconditioning a vehicle, which includes the steps of obtaining a temperature inside the vehicle and remotely starting an engine of the vehicle, an environmental control system of the vehicle, or both, if the temperature inside the vehicle is within a predetermined range of temperatures. According to the described method, the interior and exterior temperatures have to be collected during different stages of preconditioning, both with the user present and absent from the vehicle.

Available systems, thus, either require extensive user interaction and planning and/or do not enable learning of user preferences. Further, context information is not sufficiently taken into account.

Therefore, there is a need for methods and system providing personalized and intelligent precondition in order to automatically notify a user to trigger preconditioning of a vehicle or in order to directly precondition a vehicle. Such a personalized and intelligent system, which is preferably able to learn users preferences and able to take into account a specific preconditioning context can very much improve users' overall experience with the vehicle. Further, providing the interior of a vehicle with a climate and/or condition may improve driving safety because a user can enjoy a preferred climate and/or condition right away when getting into the vehicle and starting to drive (i.e. there is no period in which the preferred climate has not yet been established in the vehicle; e.g. when starting to drive when it is very hot or cold) and because a user is relieved from the task or tasks of setting and/or repeatedly adjusting different climate controls (e.g. ventilation, heater, A/C, seat heating, and other) in order to achieve a desired or preferred climate inside the vehicle. The user of a vehicle can, thus, focus more on the task of actually driving the vehicle. Additionally, the methods and systems may provide a user with information as to a recommended precondition event and/or time, such that the user may precondition the vehicle based on a corresponding notification.

The methods and systems may determine a recommended precondition event and/or time based on a context (e.g. including vehicle environment), personalized user profile(s) (e.g. user preferences), and learned user preferences (e.g. user behavior). A key concept of the methods and system in accordance with the invention includes that from collected user data and using machine-learning algorithms, a user's preconditioning preferences can be inferred and/or learned.

Methods and systems according to the present invention, thus, may provide one or more of an improved user experience, a more comfortable driving environment, and improved safety.

**Summary of Invention**

One or more of the objects specified above are substantially achieved by methods and system for smart preconditioning in accordance with any one of the appended claims, which alleviate or eliminate one or more of the disadvantages described above and which realize one or more of the aforementioned advantages.

According to the invention, there is provided a method for determining control data for controlling a component of a vehicle based on a component control model. The method comprises receiving history data indicative of a usage history; receiving context data indicative of a usage context; training the component control model based on the history data; inferring, based on the context data and on the component control model, a predicted action; and determining the control data based on the predicted action.

In a preferred embodiment, the method further comprises requesting a confirmation from a user of the vehicle and, if a confirmation is received, automatically controlling the component based on the control data; or automatically controlling the component based on the control data.

In a preferred embodiment according to any previous embodiment, the step of determining the control data based on the predicted action comprises a step of determining whether controlling the component is required, optionally wherein the step of determining whether controlling the component is required is based on the context data and/or the history data.

In a preferred embodiment according to any previous embodiment, the component control model comprises a first global model and a second personalized model. Training the component control model is further based on the first global model and/or the second personalized model; and/or inferring the predicted action is further based on the first global model and/or the second personalized model. Optionally the first global model is associated with data collected for a plurality of users and/or the second personalized model is associated with data collected for a single user of the vehicle.

In a preferred embodiment according to any previous embodiment, the history data are indicative of a usage history of the component and/or the vehicle. Additionally or alternatively, the history data comprise sensor data indicative of a plurality of sensor signals collected over at least part of the usage history. Optionally, the sensor data include one or more of: one or more values indicative of interior temperatures, one or more values indicative of exterior temperatures, and one or more values indicative of location; and/or the history data comprise action data indicative of a plurality of user actions detected over at least part of the usage history, optionally wherein the action data include one or more of: one or more values indicative of interior temperatures, one or more values indicative of exterior temperatures, and one or more values indicative of location.

In a preferred embodiment according to any previous embodiment, the context data are indicative of a usage context of the component and/or the vehicle; and/or the context data comprise one or more of weather data and location data, optionally the weather data including streaming weather data and/or predicted weather data.

In a preferred embodiment according to any previous embodiment, the component includes one or more components configured for climatization of an interior of the vehicle, optionally the one or more components including one or more of: a ventilation means, an air flow heating means, an air flow cooling means, a seat heating means, a means for heating surfaces, an actuator configured for operating a window of the vehicle, an actuator configured for operating a sunroof of the vehicle.

In a preferred embodiment according to any previous embodiment, the method further comprises determining recommended control settings for the component from the control data; and providing a user of the vehicle with the recommended control settings.

According to the invention, there is further provided a system for determining control data for controlling a component of a vehicle. The system comprises a control unit configured for performing the method according to any one of the preceding embodiments.

According to the invention, there is further provided a vehicle comprising the system according to the preceding embodiment.

**Brief Description of Drawings**

The accompanying drawings disclose exemplifying and non-limiting aspects in accordance with embodiments of the present invention.

Figure 1 illustrates a vehicle and components thereof in accordance with embodiments of the present invention,

Figure 2 schematically shows an exemplary application of inference and training in accordance with embodiments of the present invention,

Figure 3 shows a flow chart of an exemplary method for determining control data for controlling a component of a vehicle in accordance with embodiments of the present invention,

Figure 4 shows an exemplary process diagram in accordance with embodiments of the present invention,

Figure 5 shows an exemplary preconditioning model in accordance with embodiments of the present invention,

Figures 6A and 6B show diagrams illustrating the relationship between interior and exterior temperatures for different trips in accordance with embodiments of the present invention,

Figures 7A and 7B show diagrams illustrating the relationship between preconditioning and exterior temperatures for different trips in accordance with embodiments of the present invention,

Figure 8 shows a diagram illustrating a distribution of example results determined in accordance with embodiments of the present invention.

**Detailed Description**

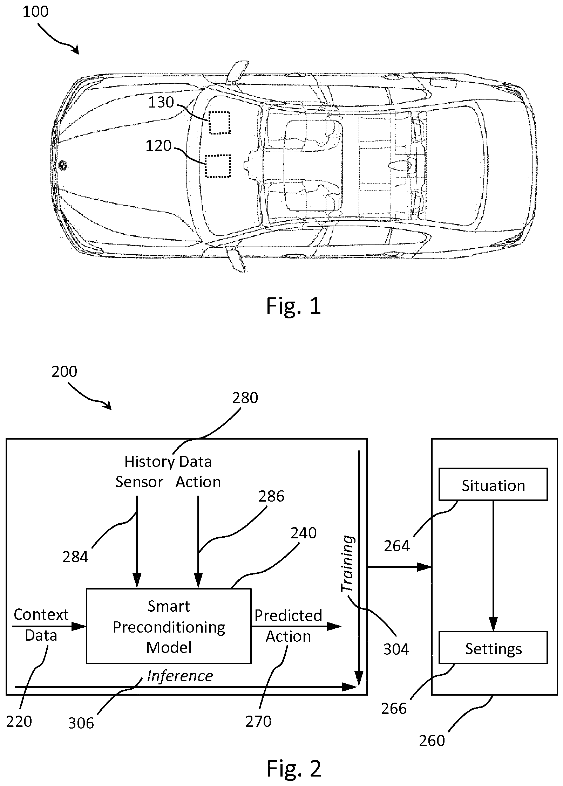

Figure 1 illustrates a vehicle 100 and components thereof in accordance with embodiments of the present invention. The vehicle 100 may include a motor vehicle, for example a car, truck, or bus. In the alternative (not shown in figure 1), the vehicle may include a motorcycle, a train or other rail-bound vehicle, an aircraft, or generally any type of motor vehicle, including electric vehicles, vehicles equipped with an internal combustion engine, and hybrid vehicles. It is noted that the particular type of vehicle is not particularly relevant in terms of applicability of the inventive concepts, provided that the vehicle 100 includes a component that can be controlled manually and/or automatically.

In the example shown in figure 1, the vehicle 100 includes a component 130 and a control unit 120. The component may be manually controllable, for example by a user setting corresponding control means (e.g. buttons, knobs, switches), and/or automatically controllable, for example by a dedicated control unit (not shown) and/or by control unit 120.

In a preferred example, the component 130 includes a plurality of components configured for climatization of the vehicle 100. The component 130, thus, may include one or more of the following components: a heater, a cooling unit (e.g. A/C), a ventilation unit, a plurality of air outlets, (electric) heater(s) integrated into the interior of the vehicle (e.g. heated seats, heated steering wheel, heated armrests or other surfaces), actuators controlling air flow (e.g. including electric windows, sunroof), and other components.

Figure 2 schematically shows an exemplary application of inference and training in accordance with embodiments of the present invention. In terms of training, history data 280 is applied to a smart preconditioning model 240, in order to train the model 240. In a preferred embodiment, the history data 280 include sensor data 284 and action data 286. The sensor data 284 include data indicative of sensor signals that have been collected over time. The sensor data 284 may include, without being so limited, interior temperatures, exterior temperatures, and location data. These data are time-stamped in order to associate the data to a specific time period. In this manner, for a given time point or period covered by the history data 280, a corresponding interior or exterior temperature value, range, or graph can be determined.

The action data 286 include data indicative of user action over time. The action data 286 may include, without being so limited, data indicative of settings that a user has applied for controlling the component 130 of the vehicle 100. These data are also time-stamped in order to associate the user actions to a specific time period. In this manner, for a given time point or period covered by the history data, the control settings active at that point in time or during that time period can be determined. Further, it can be determined whether a user has changed any of the control setting at that point in time or during that time period.

In some embodiments, the time stamp information may be used in order to provide the history data 280 with a time-stamp-dependent weight. For example, older data may be assigned a lower weight than newer data, which, when applied to action data 286, allows for adaptation to changing user preferences. In this manner, current and recent actions by a user, based on which the user's preferences can be determined, may be given a higher weight as compared to older or less recent actions.

In terms of training 304, the history data 280 is applied to the smart preconditioning model 240 in order to train the model 240 with respect to historically applied settings (e.g. actions) in view of sensor data collected at the time. The training is based on machine learning algorithms as detailed further below.

The context data 220 include, without being so limited, weather data and location data. The weather data may include streaming weather data and/or predicted weather data. The weather data may further be augmented with locally detected data (e.g. including temperature values measured at or in proximity of the vehicle). Incorporating locally detected data may allow for adaptation and/or optimization of weather data indicative of weather in a corresponding region.

In terms of inference 306, context data 220 is applied to the smart preconditioning model 240 so that a predicted action 270 may be determined based on the context data 220 and the smart preconditioning model 240. In the example of smart preconditioning, this primarily entails determining, given the context and user preference, whether preconditioning is required or not, as detailed further below.

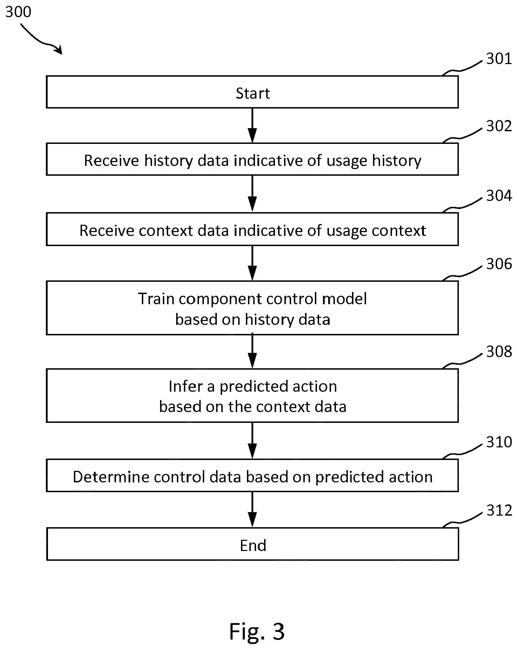

Figure 3 shows a flow chart of an exemplary method 300 for determining control data for controlling a component 130 of a vehicle 100 in accordance with embodiments of the present invention. The method 300 starts at step 301. In step 302, history data 280 indicative of a usage history of the component are received. As described above, the history data may include sensor data 284 and action data 286. In some embodiments, the control unit 120 is configured for receiving the history data 280, for example from a data source external to the vehicle 100 or from a data source integrated into the vehicle 100. In step 304 context data 220 indicative of a usage context of the component are received. As described above, the context data 220 may include weather data indicative of weather parameters including temperature, wind, humidity, atmospheric pressure, and precipitation. In some embodiments, the context data may include, for each weather parameter, a series of values representative of a development of the parameter values over time. In step 306, the component control model is trained based on the history data 280. The training may include global precondition model training, personalized precondition model training, and garage score learning. In step 308, a predicted action is inferred based on the context data 220. Inferring a predicted action may include trip prediction, context information acquisition, and precondition decision based on context information and learned model in step 306. In step 310, the control data 266 are determined based on the predicted action. The method 300 ends at step 312.

In some embodiments, method 300 further includes automatically controlling the component 130 based on the control data 266. In such embodiments, optionally, the step of automatically controlling the component 130 based on the control data 266 is preceded by requesting a confirmation from a user of the vehicle 100 in order to confirm that the user wishes to proceed with having the component 130 controlled based on the control data (e.g. including a target temperature for the climatization system). If a confirmation is received the method proceeds with automatically controlling the component 130 based on the control data 266.

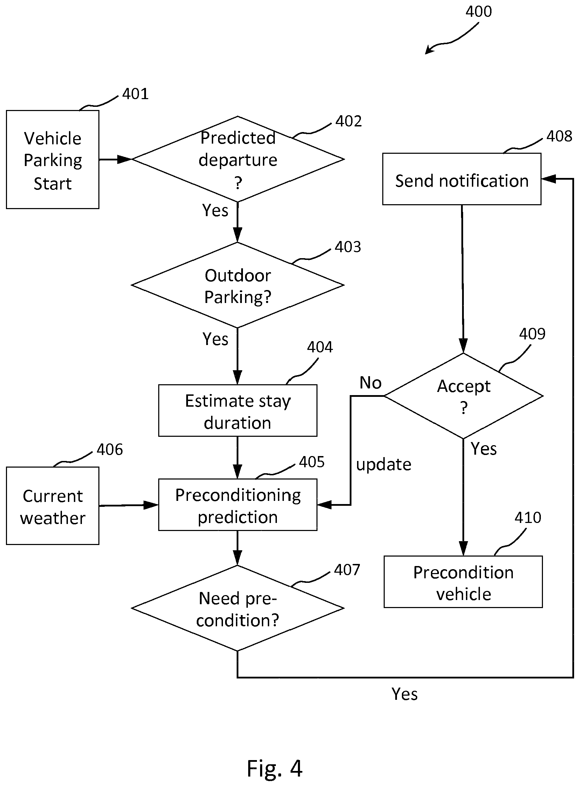

Figure 4 shows an exemplary process diagram in accordance with embodiments of the present invention. Process 400 further illustrates the example of smart preconditioning. An event marking the start of parking of a vehicle 401 triggers a sequence where an estimated stay duration 404 is determined based on context information, for example whether a departure can be predicted 402 and parking conditions 403 (e.g. parking in a garage or outside, parking location). Additionally, current weather conditions 406 are taken into account an a preconditioning prediction 405 is determined. Before the preconditioning prediction 405 is applied as actual settings for conditioning the vehicle, it is determined 407 whether the user actually wants to proceed with preconditioning, typically including the sending 408 of a notification to the user (e.g. to their smart phone or other mobile device). In the affirmative 409, the vehicle is preconditioned 410 based on the predicted preconditioning parameters 405. If the user declines, the parameters and threshold of precondition predictive model may be updated accordingly to optimize the performance by user's feedback.

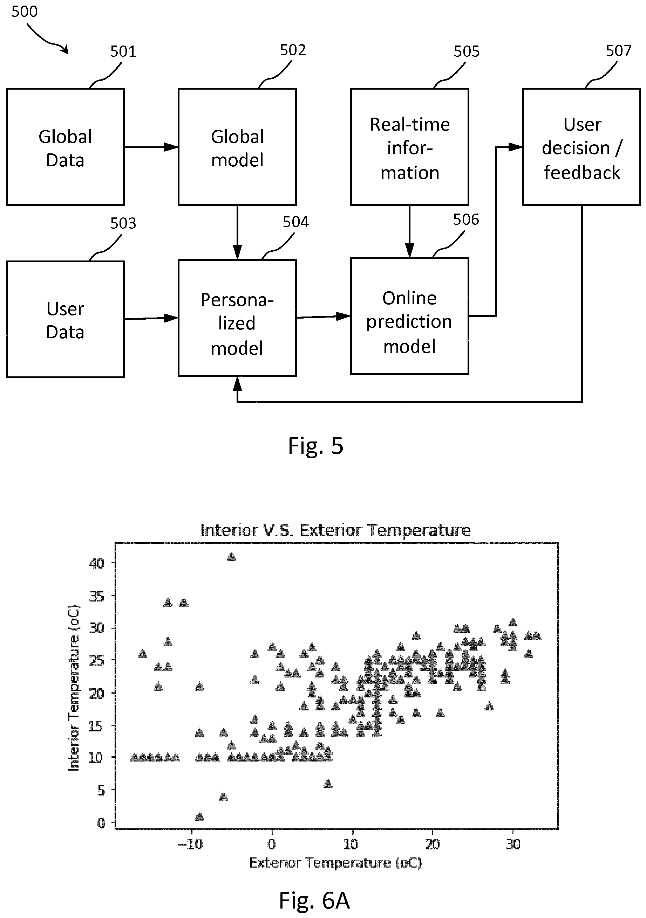

Figure 5 shows an exemplary model 500 in accordance with embodiments of the present invention. Model 500 is applicable to smart interior in general, while in the following the example of smart preconditioning is used for illustration purposes. Generally, global data 501 form the basis and input for a global model 502 and user data 503 form the basis and input for a personalized model 504. In the present illustrative example, user data 503 pertains to personal usage data characterizing the use of a vehicle by a single user. User data 503, thus, include personal driving data, for example places visited including parking locations, parking duration, but also environmental data, for example external temperature ($T_{out}$), interior temperature ($T_{in}$), and regional or local weather information, in particular weather temperature (W). In this illustrative example, weather temperature (W) is derived from forecast or (externally) reported outside temperature and may be used to predict, whether preconditioning is required or recommended. Global data 501 holds user data for a plurality of users, not just a current user of the vehicle 100.

The global model 502, in the illustrative example the preconditioning model, collects driving data from a plurality of users and trains a general preconditioning model. All users and their data are treated the same way in order to form a reference basis. This model includes three elements or steps:

- Parking environment (e.g. detecting the parking environment: indoor, outdoor, unknown),
- Global comfortable temperature model (e.g. calculating a comfortable temperature curve from global users), and
- Global precondition model (e.g. using the comfortable temperature model, the interior temperature, and the exterior temperature to build a global precondition model).

The parking environment detection receives, as input, for each trip $j$, a sequence for all the temperature data collected by the vehicle 100 as $\begin{cases} T_{out_1} & T_{in_1} \\ \cdots & \cdots \\ T_{out_i} & T_{in_i} \text{ for } i=1, \ldots, n. \\ \cdots & \cdots \\ T_{out_n} & T_{in_n} \end{cases}$

Subsequently, a feature extraction is performed. The exterior temperature (first $x$ records) criteria ($et_j$) is set as 1, if on average $T_{out_i} < \alpha_{cold}$ for where $i \leq x$, otherwise 0. The wait time ($wt_j$) is set as the duration between the first A4A record and the first record with temperature $T_{out_1}$. The maximum difference of the interior temperature and the exterior temperature for the first $x$ records ($md_j$) is set as max($abs(T_{out_i}, T_{in_i})$, $f$ or $i \leq x$. The interior temperature (first $x$ records) criteria ($it_j$) is set as 1, if on average $T_{in_i} < \beta_{cold}$ for where $i \leq x$, otherwise 0. Outdoor parking probability learning includes determining the outdoor parking probability for each start location of a trip as $T_{p_j} = f(et_j, wt_j, md_j, it_j)$.

The global comfortable temperature model receives, as input, for each trip $j$, a sequence for all the temperature data collected by the vehicle 100 as $\begin{cases} T_{out_1} & T_{in_1} \\ \cdots & \cdots \\ T_{out_i} & T_{in_i} \text{ for } i=1, \ldots, n. \\ \cdots & \cdots \\ T_{out_n} & T_{in_n} \end{cases}$

Subsequently, a feature extraction is performed. A comfortable interior temperature (last $y$ records) criteria ($it_j$) is set as $avg(T_{in_i})$, if $stdf(T_{in_i}) < \lambda$ for where $i \leq y$. Global comfortable temperature learning includes determining the average comfortable temperature for each user as ($it_j$).

The global precondition model 502 includes the following elements/steps:

- Each trip can be labeled "*climate-controlled indoor parking*" or "*outdoor parking*" or "*unknown*" based on a start location of the trip and a parking environment detection model. In the illustrative example, climate-controlled indoor parking trips are extracted and excluded from smart preconditioning.
- Given the learned global comfortable, each trip can be labeled (precondition or no precondition) based on the interior temperature.
- The features of exterior temperature and parking duration are extracted for each trip.
- A supervised learning is applied to learn the relationship between precondition and exterior temperature and parking duration.

The personalized preconditioning model 504 includes the following elements/steps:

- An offline global preconditioning model is used as an input.
- For each trip of a given user, an online learning algorithm is used to update the model parameters.
- Personal feedback to the recommendation can be used to update the model parameters as well.

The online preconditioning prediction model 506 includes the following elements/steps:

- If the parking location is outdoor parking, real-time weather information 505 will be used as model input.
- A precondition probability is then determined.

The user's precondition decision / feedback 507 includes the following elements/steps:

- The precondition decision is made based on the model 506 output. If a determined confidence level is high, the vehicle 100 can automatically be preconditioned. In case of a low confidence level, no preconditioning will be performed. Additionally or in the alternative, the user can be notified and given the option of preconditioning or not.
- After the user provides their decision/feedback, the result (e.g. decision to precondition or no preconditioning) can be used to calibrate the personalized preconditioning model 504. For example, if a user rejects the preconditioning, this can indicate that the current location is an indoor parking location which does not require preconditioning.

In order to train the models, three learning rates are used. $lr1$ denotes the learning rate for training the global model 502. $lr2$ denotes the learning rate for training the personalized model 504. And $lr3$ denotes the learning rate for updating the personalized model 504 based on user decision/feedback: $lr1 < lr2 < lr3$ with:

$$\text{User } i \begin{cases} Weather_1 & StayDuration_1 & Precondition_1 \\ Weather_j & StayDuration_j & Precondition_j \\ Weather_n & StayDuration_n & Precondition_n \end{cases}$$

$$\text{User } i+1 \begin{cases} Weather_1 & StayDuration_1 & Precondition_1 \\ Weather_j & StayDuration_j & Precondition_j \\ Weather_n & StayDuration_n & Precondition_n \end{cases}$$

...

denoting global users' history data and forming the basis for $lr1$;

$$\text{User } i \begin{cases} Weather_1 & StayDuration_1 & Precondition_1 \\ Weather_j & StayDuration_j & Precondition_j \\ Weather_n & StayDuration_n & Precondition_n \end{cases}$$

denoting the user's history data and forming the basis for $lr2$; and

$$\text{User } i \begin{cases} Weather_1 & StayDuration_1 & Precondition_1 \\ Weather_j & StayDuration_j & Precondition_j \\ Weather_m & StayDuration_m & Precondition_m \end{cases}$$

denoting the user's decision/feedback and forming the basis for $lr3$.

The methods and systems in accordance with the present invention have been tested on the basis of the following. 240 trips were extracted to meet following criteria:

- The start location of current trip is the same as the parking location of last trip.
- The trip length is longer than 5 minutes.
- The first 5 minutes of a trip exhibit valid interior and exterior temperatures.

The following parameters were investigated:

- Average exterior temperature in the first 5 minutes, which can represent weather temperature.
- Average interior temperature in the first 5 minutes, which can represent whether a precondition is needed.
- Stay duration at the parking location, which is the start location of the current trip.
- Precondition Label:

◦ 0 for no need for precondition,
◦ 1 for precondition.

If at the start of the trip, the average interior temperature is lower than 14 C, set precondition label as 1.

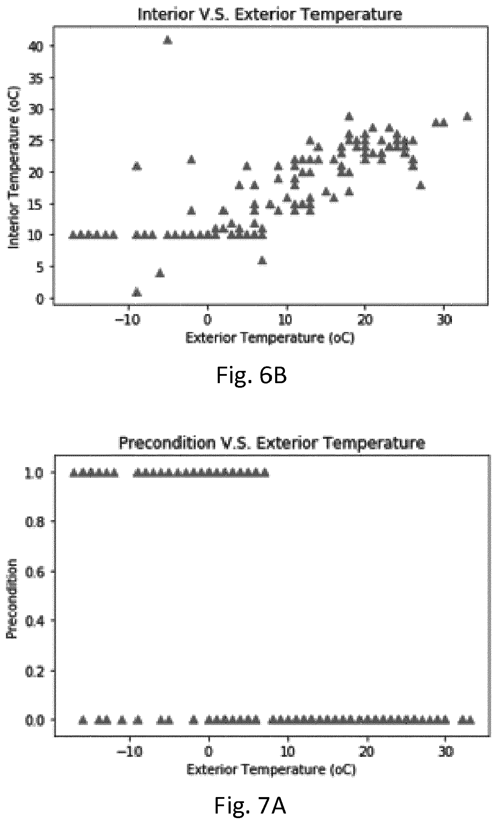

Figures 6A and 6B show diagrams illustrating the relationship between interior and exterior temperatures for different trips in accordance with embodiments of the present invention. The interior temperatures are impacted by multiple factors, for example indoor parking or outdoor parking, parking duration, and exterior temperature. By removing the trips with parking duration longer than 2 hours, the interior temperature and exterior temperature are highly correlated. For the examined data sets, the Pearson Coefficient increased from 0.60 to 0.75.

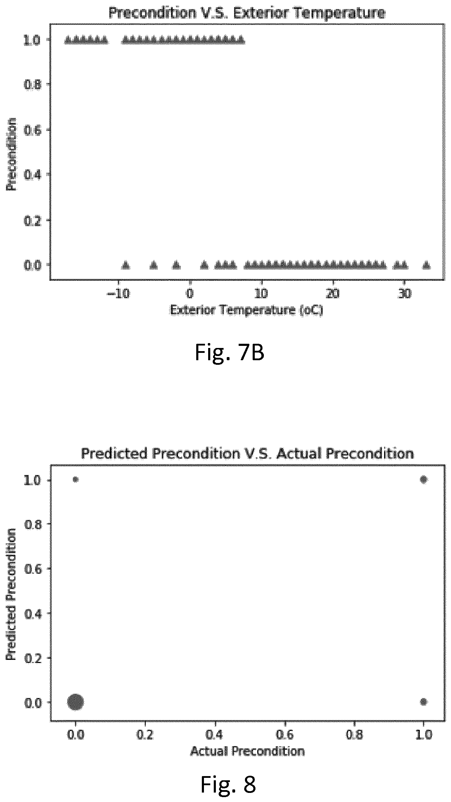

Figures 7A and 7B show diagrams illustrating the relationship between preconditioning and exterior temperatures for different trips in accordance with embodiments of the present invention. If the interior temperature is lower than 14°C, it is assumed that the user requires preconditioning of the vehicle 100. Thus, the relationship between preconditioning and exterior temperature can be established. In the diagrams shown, a logistic can describe the relationship between the precondition and exterior temperature.

Figure 8 shows a diagram illustrating a distribution of example results determined in accordance with embodiments of the present invention. In order to provide learning-based precondition, a logistic regression model is built. The features include exterior temperature and parking duration. The label are to be read as follows:

- 0 => no need for precondition,
- 1 => precondition needed.

In the examined data set, the accuracy was 82.9%, 199 out of 240.

**Claims**

1. Method (300) for determining control data (266) for controlling a component (130) of a vehicle (100) based on a component control model (240), the method comprising:

   receiving history data (280) indicative of a usage history;
   receiving context data (220) indicative of a usage context;
   training (306) the component control model (240) based on the history data (280);
   inferring (308), based on the context data (220) and on the component control model (240), a predicted action; and
   determining (310) the control data (266) based on the predicted action.

2. Method of the preceding claim, further comprising:

   - requesting a confirmation from a user of the vehicle (100) and, if a confirmation is received, automatically controlling the component (130) based on the control data (266); or
   - automatically controlling the component (130) based on the control data (266).

3. Method of any one of the preceding claims, wherein the step of determining (310) the control data (266) based on the predicted action comprises a step of determining whether controlling the component (130) is required, optionally wherein the step of determining whether controlling the component (130) is required is based on the context data (220) and/or the history data (280).

4. Method of any one of the preceding claims, wherein the component control model comprises a first global model (502) and a second personalized model (504), and wherein:

   - training (306) the component control model (240) is further based on the first global model and/or the second personalized model; and/or
   - inferring (308) the predicted action is further based on the first global model and/or the second personalized model; optionally wherein

   the first global model is associated with data collected for a plurality of users and/or the second personalized model is associated with data collected for a single user of the vehicle (100).

**5.** Method of any one of the preceding claims, wherein:

- the history data (280) are indicative of a usage history of the component (130) and/or the vehicle (100); and/or
- the history data (280) comprise sensor data (284) indicative of a plurality of sensor signals collected over at least part of the usage history, optionally wherein the sensor data (284) include one or more of: one or more values indicative of interior temperatures, one or more values indicative of exterior temperatures, and one or more values indicative of location; and/or
- the history data (280) comprise action data (286) indicative of a plurality of user actions detected over at least part of the usage history, optionally wherein the action data (286) include one or more of: one or more values indicative of interior temperatures, one or more values indicative of exterior temperatures, and one or more values indicative of location.

**6.** Method of any one of the preceding claims, wherein:

the context data (220) are indicative of a usage context of the component (130) and/or
the vehicle (100); and/or wherein
the context data comprise one or more of weather data and location data, optionally the weather data including streaming weather data and/or predicted weather data.

**7.** Method of any one of the preceding claims, wherein the component (130) includes one or more components configured for climatization of an interior of the vehicle (100), optionally the one or more components including one or more of: a ventilation means, an air flow heating means, an air flow cooling means, a seat heating means, a means for heating surfaces, an actuator configured for operating a window of the vehicle (100), an actuator configured for operating a sunroof of the vehicle (100).

**8.** Method of any one of the preceding claims, further comprising:

determining recommended control settings for the component (130) from the control data; and
providing a user of the vehicle (100) with the recommended control settings.

**9.** System (200) for determining control data (266) for controlling a component (130) of a vehicle (100), the system comprising a control unit (120) configured for performing the method according to any one of the preceding claims.

**10.** Vehicle (100) comprising the system (200) according to the preceding claim.

Fig. 1

Fig. 2

300

301

| Start |
|---|

302

| Receive history data indicative of usage history |
|---|

304

| Receive context data indicative of usage context |
|---|

306

| Train component control model based on history data |
|---|

308

| Infer a predicted action based on the context data |
|---|

310

| Determine control data based on predicted action |
|---|

312

| End |
|---|

Fig. 3

400

Fig. 4

500

501

502

505

507

| Global Data | → | Global model | | Real-time infor-mation | | User decision / feedback |

503

504

506

| User Data | → | Persona-lized model | → | Online prediction model |

Fig. 5

**Interior V.S. Exterior Temperature**

Fig. 6A

Fig. 6B

Fig. 7A

Precondition V.S. Exterior Temperature

Fig. 7B

Predicted Precondition V.S. Actual Precondition

Fig. 8

Europäisches
Patentamt

European
Patent Office

Office européen
des brevets

## EUROPEAN SEARCH REPORT

Application Number

EP 18 17 6973

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 522 128 A (JAGUAR LAND ROVER LTD [GB]) 15 July 2015 (2015-07-15)<br>* page 1 *<br>* page 8 - page 10 *<br>* page 12 *<br>* page 14 *<br>----- | 1-10 | INV.<br>G05B13/02<br>G05B15/02<br>B60H1/00 |

TECHNICAL FIELDS
SEARCHED      (IPC)

G05B
B60H

The present search report has been drawn up for all claims

| Place of search | Date of completion of the search | Examiner |
|---|---|---|
| The Hague | 14 November 2018 | Bassi, Luca |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 ..................................................................................................

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 18 17 6973

This annex lists the patent family members relating to the patent documents cited in the above-mentioned European search report.
The members are as contained in the European Patent Office EDP file on
The European Patent Office is in no way liable for these particulars which are merely given for the purpose of information.

14-11-2018

| Patent document cited in search report | Publication date | Patent family member(s) | Publication date |
|---|---|---|---|
| GB 2522128 A | 15-07-2015 | NONE | |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110153140 A1

- US 20100235046 A1